# EUROPÄISCHE PATENTSCHRIFT

(11) **EP 1 567 843 B1**
(45) Veröffentlichungstag und Bekanntmachung des Hinweises auf die Patenterteilung: **18.11.2009**
(21) Anmeldenummer: 03812164.6
(22) Anmeldetag: 02.12.2003
(51) Int. Cl.: G01L 9/00, G01L 7/08, G01L 19/06

(54) **DRUCK- UND DIFFERENZDRUCKMESSGERÄT MIT ÜBERLASTSCHUTZ**
PRESSURE AND DIFFERENTIAL PRESSURE GAUGE WITH OVERLOAD PROTECTION
DISPOSITIF DE MESURE DE PRESSION ET DE PRESSION DIFFERENTIELLE AVEC PROTECTION CONTRE LES SURCHARGES

(30) Priorität: 05.12.2002 DE 10257124
(43) Veröffentlichungstag der Anmeldung: 31.08.2005
(73) Patentinhaber: Endress + Hauser GmbH + Co. KG, 79689 Maulburg (DE)
(72) Erfinder: BURCZYK, Dietfried, 14513 Teltow (DE); DANNHAUER, Wolfgang, 14513 Teltow (DE)
(74) Vertreter: Andres, Angelika Maria
(86) Internationale Anmeldenummer: PCT/EP2003/013541
(87) Internationale Veröffentlichungsnummer: WO 2004/051208

(56) Entgegenhaltungen:
- WO-A-02/052241
- US-A- 5 230 248
- US-A- 5 583 294

## Beschreibung

Die vorliegende Erfindung betrifft Druck- und Differenzdruckmessgeräte mit einem hydraulischen Messwerk, bzw. einem hydraulischen Trennkörper. Bei diesen Messgeräten wird eine Trennmembran mit dem zu messenden Druck beaufschlagt, wobei die Trennmembran den Druck an ein hydraulisches Medium überträgt, welches den Druck über ein geeignetes Leitungssystem einem Sensorelement bzw. Elementarsensor zuleitet, wobei dieser Elementarsensor ein druckempfindliches Element, insbesondere eine Messmembran aufweist, die mit dem Druck beaufschlagt wird. Aus US-A-5583294 ist ein Druck- und Differenzdruchmessgerät gemäß dem Otherbegriff des Anspruchs 1 bekannt. Zum Schutz gegen statische Überlastungen des Messelementes , ist gewöhnlich eine Überlastmembran vorgesehen, welche eine hinreichend große hydraulische Kapazität aufweist, um das von der Trennmembran aus der Druckkammer unter der Trennmembran verdrängte Übertragungsmedium im Überlastfall vollständig aufzunehmen. Die mechanische Überlastsystem hat eine Eigenträgkeit und schnelle dynamische Druckstöße werden ggf. unvollständig abgefangen. Der vorliegenden Erfindung liegt daher die Aufgabe zugrunde, eine Überlastsicherung bereitzustellen, welche schnelle dynamische Überlastungen abfängt und drosselt. Die Aufgabe wird erfindungsgemäß gelöst durch den Druckaufnehmer gemäß des unabhängigen Patentanspruchs 1.

Der erfindungsgemäße Druckaufnehmer umfaßt eine Trennmembran und einen Grundkörper, wobei die Trennmembran an dem Grundkörper druckdicht befestigt ist, so daß zwischen dem Grundkörper und der Trennmembran eine Druckkammer ausgebildet ist, wobei sich von der Druckkammer ein Druckkanal erstreckt, und wobei ferner der Druckkanal einen Abschnitt aufweist, dessen durchströmbare Querschnittsfläche variabel ist.

Der Abschnitt des Druckkanals mit der variablen durchströmbaren Querschnittsfläche kann an einer beliebigen Position vorgesehen sein, wobei insbesondere der Eintrittsbereich des Druckkanals, d.h. der Bereich, welcher unmittelbar an die Druckkammer anschließt, derzeit bevorzugt ist.

In dem Abschnitt mit variablem durchströmbaren Querschnitt kann der Druckkanal insbesondere als Ringkanal ausgeprägt sein, wobei eine Wand des Abschnitts vorzugsweise axialsymmetrisch ausgebildet ist, und einen in axialer Richtung sich monoton verändernden Durchmesser aufweist. Die zweite Wand des Abschnitts ist komplementär zu der ersten Wand des Ringkanals geformt. Insbesondere können die erste Wand und die zweite Wand des Ringkanals die Form von Mantelflächen eines Kegelstumpfes aufweisen. Eine Veränderung der durchströmbaren Querschnittsfläche kann beispielsweise dadurch erfolgen, daß die zweite Wand bezüglich der ersten Wand in axialer Richtung verschoben wird, so daß sich der Abstand zwischen der ersten Wand und der zweiten Wand ändert.

Die erste Wand des Ringkanals kann beispielsweise im Eintrittsbereich des Druckkanals durch eine kegelförmige Aufweitung zur Druckkammer hin ausgebildet sein. Die zweite Wand des Ringkanals wird in diesem Fall durch einen Vorsprung der Trennmembran gebildet, der dadurch entsteht, daß die Trennmembran auf Grundkörper abgeprägt wird.

Wenn die Trennmembran im Meßbetrieb durch Druckbeaufschlagung an den Grundkörper angenähert wird, wird der Ringspalt zwischen der ersten Wand des Ringkanals und der zweiten Wand des Ringkanals verengt, so daß dessen durchströmbare Querschnittsfläche abnimmt. Weiterhin kann ein Ringkanal mit variabler Querschnittsfläche realisiert werden, indem der Druckkanal an beliebiger Position einen Abschnitt mit einer kegelmantelförmigen Aussenwand aufweist, wobei in dem Kanal ein axial beweglicher Füllkörper mit einer komplementären Kegelmantelfläche angeordnet ist. Der Füllkörper kann optional mit einem elastischen Element, beispielsweise einer Feder, in einer Gleichgewichtsposition gehalten werden.

Schließlich kann der Kanal einen vorzugsweise verengten Abschnitt mit einer elastisch verformbaren Wand aufweisen. Die elastisch verformbare Wand kann beispielsweise in der Außenwand ausgebildet werden. In diesem Fall sollte dieser Abschnitt vorzugsweise von außen mit dem Druck in der Druckkammer beaufschlagbar sein. Die Verengung kann zweckmäßig durch entsprechende Ausgestaltung der Gleichgewichtslage des elastischen Abschnitts in der Außenwand geformt werden. Gleichermaßen ist die Verengung durch einen in dem Kanal koaxial angeordneten Füllkörper zu erzielen, der im Bereich des elastischen Abschnitts eine radiale Aufweitung, beispielsweise in Form eines Strömungskörpers mit Tropfenprofil, aufweist.

In einer alternativen Ausgestaltung ist sowohl die Verengung als auch die elastische Wand in einem axialen Abschnitt eines koaxial in dem Kanal angeordneten Füllkörpers vorgesehen, wobei die elastische Wand die Innenwand eines Ringkanals bildet. Vorzugsweise weist der Füllkörper einen Innenraum auf, welcher zumindest abschnittsweise von der elastischen Wand begrenzt ist. Der Innenraum kommuniziert über eine Öffnung mit dem Kanal, so daß der statische Druck im Kanal und im Innenraum gleich ist.

Die Ausgestaltung des Abschnitts mit variablen durchströmbaren Querschnitt als Ringkanal, beispielsweise durch einen Füllkörper, bietet den Vorteil, daß bei Varianten mit einer elastischen Wand, durch relativ geringe Veränderungen des Radius der elastischen Wand eine große relative Veränderung der durchströmbaren Querschnittsfläche erfolgen kann. Auf diese Weise ist auch bei Ausgestaltungen mit elastischen Waandabschnitten ein nahezu vollständiger Verschluß des Abschitts mit variablem durchströmbaren Querschnitt möglich.

Die Überlastsicherung des erfindungsgemäßen Druckaufnehmers arbeitet nach dem folgenden Prinzip. Wenn der Druckaufnehmer mit einem Messdruck beaufschlagt wird, so werden geringe Mengen der der hydraulischen Übertragungsflüssigkeit aus der Druckkammer in den Druckkanal verschoben, um den Druck von dort zu einer Messzelle zu übertragen. Hierbei kommt es bei Druckschwankungen im normalen Messbereich nur zu relativ niedrigen Strömungsgeschwindigkeiten. Wenn jedoch schnelle Druckschläge auftreten, so steigt die Strömungsgeschwindigkeit stark an, so daß der Druck um Druckkanal um ρ*v²/2 vermindert wird, wobei v die Geschwindigkeit des Übertragungsmediums und ρ dessen Dichte ist. Das Absenken des Drucks im Druckkanal führt jedoch zum Ansaugen der variablen Wand des Druckkanals, wodurch der Strömungswiderstand im Kanal ansteigt. Hierdurch wird die Druckmesszelle vor schnellen Überlastdruckschlägen geschützt. Insofern, als die Verkleinerung der Querschnittsfläche eine höhere Strömungsgeschwindigkeit erfordert um die Übertragungsflüssigkeit durch den Engpass im Druckkanal zu befördern, geht dieses mit einer erneuten Druckverminderung und weiterem Ansaugen der Kanalwand einher, so dass der Kanal schließlich vollständig verschlossen werden kann.

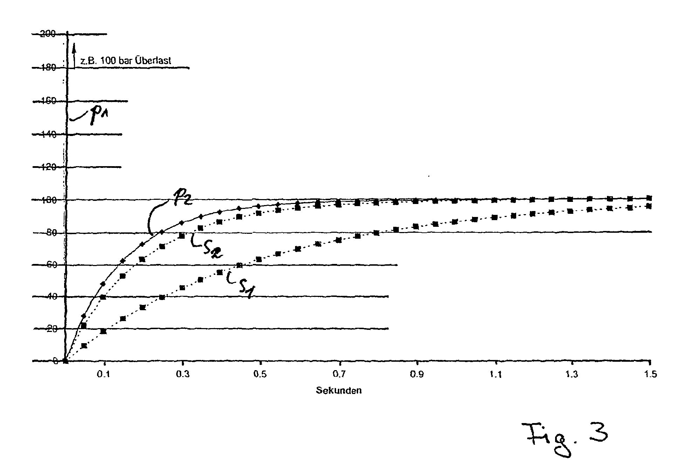

Die Wirksamkeit dieser Überlastsicherung nach dem Venturiprinzip ist in Fig. 3 dargestellt, welche die zeitliche Entwicklung des Drucks und eines entsprechenden Sensorsignals für Druckveränderungen im Messbereich und im Überlastfall darstellt. Das Sensorsignal S ist hierbei jeweils ein Mass dafür, wie der Druck durch den Druckkanal zum Sensor übertragen wurde. P2 zeigt einen typischen Druckanstieg, wie er in einem industriellen Prozess erfolgen kann, wobei das Sensorsignal S2 den zeitlichen Verlauf des Drucks vergleichsweise schnell folgt. P1 zeigt die steile Anstiegsflanke eines Überlastdruckschlages, der die Skala des gezeigten Graphen bei weitem übersteigt. Aufgrund der hohen Geschwindigkeiten, die im Druckkanal auftreten, entsteht dort ein solcher Unterdruck, daß die variable Kanalwand den Querschnitt so weit verengt bzw. verschließt, daß der Druckschlag nicht zum Sensor übertragen werden kann, und das Sensorsignal dem Druckverlauf nur sehr langsam folgt.

Der Begriff Druckaufnehmer bezeichnet im Zusammenhang mit der vorliegenden Erfindung einerseits einfache Druckmittler, die beispielsweise über eine Kapillarleitung an einen Sensor oder einen Meßumformer angeschlossen werden können, und andererseits komplette Meßwerke mit und integrierter Druckmeßzelle.

Weitere Vorteile und Gesichtspunkte der Erfindung ergeben sich aus den abhängigen Ansprüchen, der Beschreibung der Ausführungsbeispiele und den Zeichnungen. Es zeigt:
- Fig. 1:: Einen Schnitt durch ein erstes Ausführungsbeispiel eines erfindungsgemäßen Drucksensors;
- Fig. 2:: einen Schnitt durch ein zweites Ausführungsbeispiel eines erfindungsgemäßen Druckaufnehmers;
- Fig. 3:: die zeitliche Entwicklung von Druck und entsprechendem Sensorsignal für einen erfindungsgemäßen Druckaufnehmers im Messbereich und im Überlastfall.

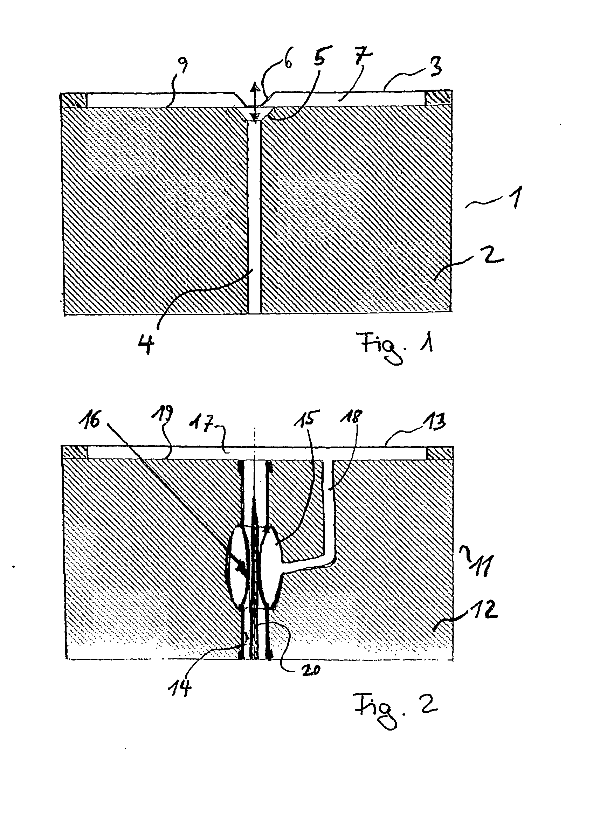

Der in Fig. 1 gezeigte Druckaufnehmer 1 umfasst einen Grundkörper 2 mit vorzugsweise zylindrischer Geometrie.

An einer ersten Stirnseite des Grundkörpers ist eine Trennmembran 3 mit ihrem Rand befestigt, so dass sich zwischen dem Grundkörper und der Trennmembran eine Druckkammer 7 ausbildet. Von der Druckkammer erstreckt sich ein Druckkanal 4, durch den der Druck, mit dem die Trennmembran 3 beaufschlagt wird, mittels einer hydraulischen Übertragungsflüssigkeit, insbesondere einem Silikonöl, zu einer Messzelle übertragen wird. Trennmembranen weisen häufig konzentrische Wellenzüge auf, um einen ausreichenden Membranhub zu ermöglichen. Zur Erzeugung dieser Wellenstruktur kann beispielsweise das Membranbett 9 in der Stirnfläche des Grundkörpers 1 eine entsprechende Wellenstruktur aufweisen, wobei die Trennmembran 3 nach der Befestigung an dem Grundkörper 2 auf dem Membranbett 9 abgeprägt wird. Insofern, als es auch Einzelheiten dieser Wellenstruktur im Zusammenhang mit der vorliegenden Erfindung nicht ankommt, ist diese in den Ausführungsbeispielen nicht dargestellt.

Der Druckkanal 4 umfaßt in seinem Eingangsbereich, eine Aufweitung mit einer kegelstumpfförmigen Mantelfläche 5. Die Trennmembran weist einen zur Aufweitung 5 komplementären Vorsprung 6 auf, der beispielsweise dadurch erhältlich ist, dass die Trennmembran auf der Stirnfläche des Grundkörpers 1 abgeprägt wird. In der Gleichgewichtslage, d.h. wenn die Trennmembran nicht mit Druck beaufschlagt wird, oder bei geringen Druckbeaufschlagungen im Rahmen des Messbereiches ist die Querschnittsfläche des Einlasses des Druckkanals kaum durch den Vorsprung 6 begrenzt. Wenn jedoch eine größere Druckbeaufschlagung erfolgt, wird der konische Vorsprung 6 in den Einlassbereich hineinverschoben, und es entsteht ein schmaler Ringspalt mit reduzierter Querschnittsfläche, durch den die Übertragungsflüssigkeit mit erhöhter Geschwindigkeit gepresst wird. Dies führt wiederum zu einem Ansaugen des Vorsprungs 6, dessen Mantelfläche als innere Wand des Ringspalts dient, zur gegenüberliegenden Aussenwand 5 des Ringspalts aufgrund des Venturieffekts. Somit ist eine an den Druckkanal 4 angeschlossene Druckmesszelle vor Zerstörung durch schnelle Druckschläge geschützt. Als vorteilhaft hat sich ein Kegelstumpf erwiesen der einen maximalen Durchmesser von 1.5 mm hat und einen minimalen Durchmesser von 0.8 mm. Die Kegelhöhe beträgt 1,5 mm. Ber hydraulische Widerstand des Venturikanals im Trennmembranbereich sollte im dynamischen Überlastfall ca. 90% des hydraulischen Gesamtwiderstandes entsprechen.
Fig. 2 zeigt einen Längsschnitt durch eine zweite Ausführungsform, wobei der Druckaufnehmer 11 im wesentlichen die gleiche Grundstruktur wie der zuvor beschriebene Druckaufnehmer aufweist. Lediglich die Überlastsicherung nach dem Venturiprinzip ist anders ausgestaltet. In diesem Fall umfaßt der Druckkanal 14 ein Rohr, welches in einer entsprechenden Bohrung im Grundkörper 12 eingesetzt und in seinem Endbereich mit dem Grundkörper verschweißt ist. Das Rohr 14 umfaßt einen verjüngten Abschnitt, mit einer Einschnürung 16, in dem die Rohrwand radial flexibel ist. Die Einschnürung 16 fluchtet axial mit einer ringförmigen Vertiefung, die in der Bohrung des Grundkörpers 12 ausgebildet ist, so daß zwischen der Einschnürung und der Vertiefung eine Ringkammer 15 ausgebildet ist, welche das Rohr 14 umgibt. Die Ringkammer 15 kommuniziert über einen Ringkammerkanal 18 mit der Druckkammer 17, die zwischen der Trennmembran 13 und dem Grundkörper 12 ausgebildet ist. Im Gleichgewichtsfall, d.h. wenn das Übertragungsmedium nicht fließt, herrscht in der Ringkammer 15 und in dem Kanal 14 der gleiche Druck. Unter diesen Bedingungen ist auch die Rohrwand im Bereich der Einschnürung 16 in ihrer Gleichgewichtslage, so daß die Querschnittsfläche des Druckkanals im Bereich der Einschnürung hinreichend groß ist, um das Übertragungsmedium mit langsamer Geschwindigkeit fliessen zu lassen. Wenn nun im Falle eines Druckschlages sich die Geschwindigkeit der Übertragungsflüssigkeit im Bereich der Einschnürung erhöht, wird die elastische Aussenwand des Rohres 14 aufgrund des Venturieffekts nach innen gesogen, wodurch der Rohrquerschnitt bis zum Verschluss verengt werden kann. Selbstverständlich sind bei der Gestaltung der Verengungen verschiedene Alternativen denkbar. So kann zum Beispiel ein Füllkörper 20 in den Druckkanal 14 eingesetzt werden, so daß im Bereich der Verengung 16 ein Ringkanal entsteht, dessen Innenwand durch den Füllkörper 20 und dessen Aussenwand durch die flexible Wand 16 definiert werden. Durch Einsatz eines Füllkörpers ist ein vollständiger Verschluß des Druckkanals aufgrund des Venturieffekts einfacher zu erzielen. Bei der Gestaltung dieser Ausführungsform ist selbstverständlich darauf zu achten, daß über den Ringkammerkanal 18 kein Bypass entsteht, mit dem der Druckschlag an der Einschnürung 16 vorbei zur Druckmesszelle übertragen werden könnte. Als Materialien für die elastischen Wandabschnitte sind Ringmembranen aus VA (wie bei Rohrdruckmittlern) oder auch Elastomere (NBR, Viton etc.) denkbar.

Um eine optimale Wirkung der Überlastsicherung nach dem Venturieffekt zu erzielen, wird derzeit bevorzugt, wenn der Abschnitt des Druckkanals mit Variablen durchströmbaren Querschnitt bereits in der Gleichgewichtslage bzw. im normalen Messbetrieb einen Strömungswiderstand aufweist, der signifikant, insbesondere mindestens 5% zum hydraulischen Gesamtwiderstand der Übertragungsstrecke zwischen der Druckkammer und einer Druckmesszelle beiträgt. Weiter bevorzugt trägt der Widerstand mindestens 10% bzw. 20% und besonders bevorzugt mindestens 40% zum Gesamtwiderstand bei. Dieses Kriterium ergibt sich aufgrund folgender Überlegung: Je stärker der Widerstand des Abschnitts mit variablem Querschnitt den Gesamtwiderstand des strömenden Systems beeinflusst, um so effektiver ist seine Steuerungswirkung aufgrund des Venturieffekts. Sollte nämlich an anderer Stelle ein erheblich größerer Strömungswiderstand vorgesehen sein, der die Strömungsgeschwindigkeit in der Venturisicherung limitiert, so könnte auf diese Weise der Venturieffekt limitiert bzw. ganz ausgeschaltet werden.

## Patentansprüche

1. Druckaufnehmer (1; 11) zum Erfassen eines Drucks, mit einer Trennmembran (3; 13) und einen Grundkörper (2; 12) , wobei die Trennmembran an dem Grundkörper druckdicht befestigt ist, so daß zwischen dem Grundkörper und der Trennmembran eine Druckkammer (7; 17) ausgebildet ist, wobei sich von der Druckkammer ein Druckkanal (4;14) erstreckt und die Druckkammer und der Druckkanal mit einer hydraulischen Übertragungsflüssigkeit gefüllt sind, **dadurch gekennzeichnet, daß** der Druckkanal zumindest einen Abschnitt aufweist, dessen durchströmbare Querschnittsfläche variabel ist.

2. Druckaufnehmer (1; 11) nach Anspruch 1, wobei die variable durchströmbare Querschnittsfläche des Abschnitts von der Geschwindigkeit der hydraulischen Übertragungsflüssigkeit in dem Abschnitt abhängt.

3. Druckaufnehmer nach Anspruch 1 oder 2, wobei der Abschnitt des Druckkanals mit der variablen durchströmbaren Querschnittsfläche im Eintrittsbereich des Druckkanals angeordnet ist.

4. Druckaufnehmer (1; 11) nach einem der Ansprüche 1 bis 3, wobei der Abschnitt mit variablem durchströmbaren Querschnitt einen Ringkanal zwischen einer inneren Wand (5; 20) und einer äußeren Wand (6; 16)aufweist.

5. Druckaufnehmer nach Anspruch 4, wobei der durchströmbare Querschnitt des Ringkanals durch relative Verschiebungen der axialen Position der inneren Wand (6) bezüglich der äußeren Wand (5) verändert werden kann.

6. Druckaufnehmer nach Anspruch 5, wobei die innere Wand (6) des Ringkanals einen Vorsprung der Trennmembran (3) umfaßt.

7. Druckaufnehmer nach Anspruch 5, wobei in dem Druckkanal ein axial beweglicher Füllkörper andgeordnet ist und die innere Wand des Ringkanals an dem Füllkörper ausgebildet ist.

8. Druckaufnehmer nach Anspruch 7, weiterhin umfassend ein elastisches Element, wobei eine Gleichgewichtsposition des Füllkörpers bezüglich des Grundkörpers mittels des elastischen Elementes definiert ist.

9. Druckaufnehmer nach einem der Ansprüche 4 bis 8, wobei die innere Wand und und die äußere Wand des Ringkanals zumindest abschnittsweise kegelstumpfmantelflächenförmig ausgebildet sind.

10. Druckaufnehmer nach einem der vorhergehenden Ansprüche wobei der Abschnitt mit variablem durchströmbaren Querschnitt eine elastisch verformbare Wand (16) aufweist.

11. Druckaufnehmer nach Anspruch 10, wobei die elastisch verformbare Wand (16) als Außenwandabschnitt des Druckkanals (14) ausgebildet ist.

12. Druckaufnehmer nach Anspruch 11, wobei der elastisch verformbare Außenwandabschnitt von einer Ringkammer (15) umgeben ist, die mit der Druckkammer (17) kommuniziert.

13. Druckaufnehmer nach Anspruch 10, wobei, die elastisch verformbare Wand als innere Wand eines Ringkanals ausgebildet ist.

14. Druckaufnehmer nach einem der vorhergehenden Ansprüche, wobei der Abschnitt mit der variablen durchströmbaren Strömungsfläche während des Meßbetriebs im Nennbereich des Drucksensors mindestens 10% zum Strömungswiderstands des hydraulischen Pfades zwischen der Druckkammer und einer Druckmeßzelle beiträgt, die über den hydraulischen Pfad mit dem Meßdruck beaufschlagt wird.

## Claims

1. Pressure sensor (1; 11) for measuring a pressure, with an isolating diaphragm (3; 13) and a meter body (2; 12), **characterized in that** the isolating diaphragm is secured pressure-tight to the meter body in such a way that a pressure chamber (7; 17) is formed between the meter body and the isolating diaphragm, whereby a pressure channel (4; 14) extends from the pressure chamber, and the pressure chamber and the pressure channel are filled with a hydraulic transfer liquid, **characterized in that** the pressure channel exhibits at least one section with a variable cross-sectional area through which media can flow.

2. Pressure sensor (1; 11) as per Claim 1, whereby the variable cross-sectional area of the section through which media can flow depends on the speed of the hydraulic transfer liquid in the section.

3. Pressure sensor as per Claim 1 or 2, where the section of the pressure channel with the variable cross-sectional area through which media can flow is arranged in the inlet area of the pressure channel.

4. Pressure sensor (1; 11) as per one of the Claims 1 to 3, where the section with the variable cross-sectional area through which media can flow exhibits an annular channel between an inner wall (5; 20) and an outer wall (6; 16).

5. Pressure sensor as per Claim 4, where the cross-section of the annular channel through which media can flow can be altered through relative shifts of the axial position of the inner wall (6) vis-à-vis the outer wall (5).

6. Pressure sensor as per Claim 5, where the inner wall (6) of the annular channel comprises a projection of the isolating diaphragm (3).

7. Pressure sensor as per Claim 5, where an axially movable filling element is arranged in the pressure channel and the inner wall of the annular channel is formed on the filling element.

8. Pressure sensor as per Claim 7, further comprising an elastic element, whereby the elastic element defines a position of equilibrium of the filling element vis-à-vis the meter body.

9. Pressure sensor as per one of the Claims 4 to 8, where the inner wall and the outer wall of the annular channel have a truncated cone shape at least in part.

10. Pressure sensor as per one of the previous claims, where the section with the variable cross-sectional area through which media can flow exhibits a ductile wall (16).

11. Pressure sensor as per Claim 10, where the ductile wall (16) is formed as the outer wall section of the pressure channel (14).

12. Pressure sensor as per Claim 11, where the ductile outer wall section is surrounded by an annular chamber (15) that communicates with the pressure chamber (17).

13. Pressure sensor as per Claim 10, where the ductile wall is formed as an inner wall of an annular channel.

14. Pressure sensor as per one of the previous claims, where, during operation, the section with the variable cross-sectional area through which media can flow contributes at least 10% to the flow resistance of the hydraulic path between the pressure chamber and a pressure measuring cell in the nominal range of the pressure sensor, said pressure measuring cell being exposed to the measured pressure via the hydraulic path.

## Revendications

1. Capteur de pression (1, 11) destiné à la mesure d'une pression, doté d'une membrane séparatrice (3, 13) et d'un corps de base (2, 12), la membrane séparatrice étant fixée sur le corps de base de façon étanche à la pression, de telle sorte à former une chambre de pression (7, 17) entre le corps de base et la membrane séparatrice, un canal de pression (4, 14) s'étendant de la chambre de pression et la chambre de pression et le canal de pression étant remplis d'un liquide de transmission hydraulique, **caractérisé en ce que** le canal de pression présente au minimum une partie, dont l'aire de la section traversable est variable.

2. Capteur de pression (1, 11) selon la revendication 1, pour lequel l'aire de la section traversable variable de la partie dépend de la vitesse du liquide de transmission hydraulique dans la partie.

3. Capteur de pression selon la revendication 1 ou 2, pour lequel la partie du canal de pression comprenant l'aire de la section traversable variable est disposée dans la zone d'entrée du canal de pression.

4. Capteur de pression (1, 11) selon la revendication 1 à 3, pour lequel la partie comprenant la section traversable variable présente un canal annulaire entre une paroi intérieure (5, 20) et une paroi extérieure (6, 16).

5. Capteur de pression selon la revendication 4, pour lequel l'aire traversable du canal annulaire peut être modifiée par des décalages relatifs de la position axiale de la paroi intérieure (6) par rapport à la paroi extérieure (5).

6. Capteur de pression selon la revendication 5, pour lequel la paroir intérieure (6) du canal annulaire comprend une partie en saillie de la membrane séparatrice (3).

7. Capteur de pression selon la revendication 5, pour lequel est disposé dans le canal de pression un corps de remplissage mobile axial et la paroi intérieure du canal annulaire est formée au niveau du corps de remplissage.

8. Capteur de pression selon la revendication 7, comprenant en outre un élément élastique, une position d'équilibre du corps de remplissage par rapport au corps de base étant définie au moyen de l'élément élastique.

9. Capteur de pression selon la revendication 4 à 8, pour lequel la paroi intérieure et la paroi extérieure du canal annulaire sont formées au minimum partiellement par une surface latérale tronconique.

10. Capteur de pression selon l'une des revendications précédentes, pour lequel la partie comprenant la section traversable variable présente une paroi déformable élastique (16).

11. Capteur de pression selon la revendication 10, pour lequel la paroi déformable élastique (16) est formée en tant qu'élément de paroi extérieure du canal de pression (14).

12. Capteur de pression selon la revendication 11, pour lequel l'élément de paroi extérieure déformable élastique est entouré d'une chambre annulaire (15), laquelle communique avec la chambre de pression (17).

13. Capteur de pression selon la revendication 10, pour lequel la paroi déformable annulaire est formée en tant que paroi intérieure d'un canal annulaire.

14. Capteur de pression selon l'une des revendications précédentes, pour lequel la partie comprenant la surface d'écoulement traversable variable contribue, pendant la mesure dans la plage nominale du capteur de pression, à au moins 10 % de la résistance à l'écoulement de la voie hydraulique entre la chambre de pression et une cellule de mesure de pression, laquelle est soumise à la pression de mesure par l'intermédiaire de la voie hydraulique.
